(19) **Europäisches Patentamt**
**European Patent Office**
**Office européen des brevets**

(11) **EP 1 317 955 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(51) Int Cl.:
**B01J 19/32** (2006.01)  **B01J 8/00** (2006.01)
**B01J 23/10** (2006.01)  **B01J 8/02** (2006.01)
**C07C 45/28** (2006.01)  **B01D 3/00** (2006.01)

(21) Anmeldenummer: **02026963.5**

(22) Anmeldetag: **04.12.2002**

(54) **Vorrichtung und Verfahren zur Durchführung von heterogen katalysierten Reaktionen**

Device and process for the performance of heterogeneously catalysed reactions

Dispositif et procédé pour des réactions hétérogènes catalytiques

(84) Benannte Vertragsstaaten:
**AT BE BG CH CY CZ DE DK EE ES FI FR GB GR IE IT LI LU MC NL PT SE SI SK TR**

(30) Priorität: **06.12.2001 DE 10159816**

(43) Veröffentlichungstag der Anmeldung:
**11.06.2003 Patentblatt 2003/24**

(73) Patentinhaber: **BASF SE**
**67056 Ludwigshafen (DE)**

(72) Erfinder:
• **Kaibel, Gerd, Dr.**
**68623 Lampertheim (DE)**

• **Miller, D.I. Christian**
**67152 Ruppertsberg (DE)**
• **Jansen, D.I. Helmut**
**41542 Dormagen (DE)**
• **Kaibel, D.I. Björn**
**40723 Hilden (DE)**

(56) Entgegenhaltungen:
**WO-A-95/01834  WO-A-99/48604**
**DE-A- 4 201 456  US-B1- 6 299 845**

• **PATENT ABSTRACTS OF JAPAN Bd. 001, Nr. 111 (C-027), 26. September 1977 (1977-09-26) -& JP 52 072362 A (TORAY IND INC), 16. Juni 1977 (1977-06-16)**

**Beschreibung**

Die Erfindung betrifft einen Festbettreaktor zur Durchführung von Reaktionen fluider Reaktionsgemische in Gegenwart eines teilchenförmigen heterogenen Katalysators, ein Verfahren sowie eine Verwendung.

Obwohl Festbettreaktoren in der chemischen Industrie breit eingesetzt werden, stößt ihre technische Anwendbarkeit systembedingt oft an Grenzen. Störend ist beispielsweise, dass bei hohen Katalysatorschüttungen die untersten Bereiche der Schüttung mechanisch stark belastet sind, da sie das mitunter beträchtliche Gesamtgewicht der Katalysatorschüttung aufnehmen müssen. Bei der Katalysatorenentwicklung zwingt das oft zu Kompromisslösungen, indem ein hinsichtlich seiner chemischen Performance optimierter Katalysator auf Kosten seiner Raum-Zeit-Ausbeute und Selektivität so modifiziert werden muss, dass er die unvermeidlichen mechanischen Belastungen aufnehmen kann. Eine weitere ebenfalls praktizierte Kompromisslösung besteht darin, dass kürzere Intervalle für einen Katalysatorwechsel verbunden mit einer Kapazitätsverminderung der Anlage und Zusatzkosten zu akzeptieren sind.

Festbettreaktoren besitzen die Eigenschaft, dass der Queraustausch der strömenden Medien nur schwach ausgeprägt ist. Bei stark exothermen Reaktionen erhöht dies die Gefahr von Zonen mit überhöhter Reaktionstemperatur, sogenannten Hotspots. Diese Eigenschaft zwingt zu Vorsichtsmaßnahmen hinsichtlich der maximal zulässigen Reaktionstemperatur, um lokal initiierte Durchgehreaktionen, beispielsweise Methanisierungen im Falle von Hydrierungen, sicher zu unterbinden. Die Auswahl des wirtschaftlichsten Betriebspunktes ist eingeschränkt.

Eine weitere nachteilige Eigenschaft von Festbettreaktoren besteht darin, dass bei feinen Katalysatoren, die hinsichtlich der Katalysatoraktivität oft gewählt werden müssen, hohe Druckverluste auftreten. Insbesondere bei Reaktionen mit gasförmigen Medien kann dies die Wirtschaftlichkeit stark beeinträchtigen.

Dem gegenüber war es Aufgabe der Erfindung, einen Festbettreaktor zur Verfügung zu stellen, der die genannten Nachteile nicht aufweist.

Die Lösung geht aus von einem Festbettreaktor zur Durchführung von Reaktionen fluider Reaktionsgemische in Gegenwart eines teilchenförmigen heterogenen Katalysators, mit einer strukturierten Packung, die im Reaktorinnenraum Zwischenräume ausbildet.

Die Erfindung gemäß Anspruch 1 ist dadurch gekennzeichnet, dass der Quotient aus dem hydraulischen Durchmesser für den Fluidstrom durch die Packung und dem äquivalenten Durchmesser der Katalysatorteilchen im Bereich von 2 bis 20, bevorzugt im Bereich von 5 bis 10, liegt der Gestalt, dass die Katalysatorteilchen unter Einwirkung der Schwerkraft in die Zwischenräume eingebracht, sind und lose verteilt und ausgetragen werden können.

Es wurde somit gefunden, dass es möglich ist, einen Festbettreaktor mit einer strukturierten Packung zu bestücken und in die oben genannte Zwischenräume desselben einen teilchenförmigen heterogenen Katalysator einzubringen.

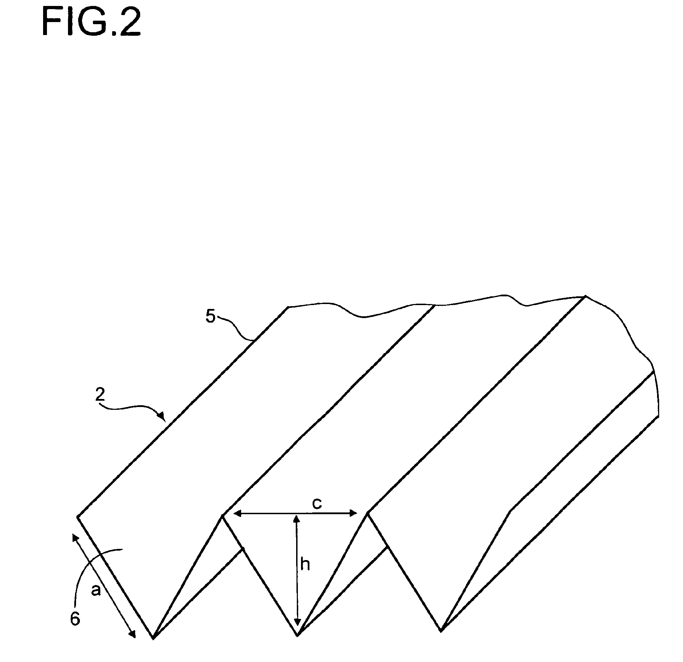

Der hydraulische Durchmesser wird in bekannter Weise als das Verhältnis zwischen dem vierfachen der durchströmten Fläche und dem Umfang derselben definiert. Die konkrete Berechnung desselben für eine Packung mit geradlinigem Knicken ist in der Figurenbeschreibung, in Verbindung mit Figur 2 erläutert.

Der äquivalente Durchmesser von Teilchen, vorliegend Katalysatorteilchen, wird durch das Verhältnis zwischen dem sechsfachen Volumen und der Oberfläche des Teilchens definiert (vergleiche hierzu VDI Wärmeatlas, 5. Auflage, 1988, Lk1).

Indem ein Quotient aus dem hydraulischen Durchmesser für den Gasstrom durch die Packung und dem äquivalenten Durchmesser der Katalysatorteilchen im oben definierten Bereich eingehalten wird, wird erfindungsgemäß gewährleistet, dass die Katalysatorteilchen lose unter Einwirkung der Schwerkraft in die Zwischenräume der Packung eingebracht, verteilt und ausgetragen werden.

Bezüglich der einsetzbaren Packungen gibt es grundsätzlich keine Einschränkungen: es können die Einbauten verwendet werden, die regelmäßig in der Destillationstechnik eingesetzt werden. Dabei bilden die Packungen im Reaktorinnenraum Zwischenräume aus, die grundsätzlich untereinander verbunden sein müssen, um eine Durchströmung durch das Reaktionsgemisch zu gewährleisten.

Die Erfindung ist nicht eingeschränkt bezüglich der Form der einsetzbaren Katalysatorteilchen; zur Verbesserung der Raum-Zeit-Ausbeute von heterogen katalysierten Reaktionen sind jedoch hohe spezifische Oberflächen und somit kleine Katalysatorteilchen bevorzugt. In Schüttungen von Katalysatorteilchen nimmt bekanntermaßen der Druckverlust bei zunehmend kleineren Katalysatorteilchen zu und begrenzt die Flüssigkeits- und Dampfdurchsätze auf unwirtschaftlich kleine Werte. Demgegenüber sind erfindungsgemäß gerade kleine Katalysatorteilchen, die auch bezüglich der katalytischen Wirksamkeit bevorzugt sind, besonders geeignet zum kombinierten Einsatz mit einer Packung, da sie sich umso einfacher einbringen und, je kleiner ihre Abmessungen im Vergleich zu den Abmessungen der Zwischenräume der Packung oder der Füllkörper sind.

Die Katalysatorteilchen sind bevorzugt Vollkatalysatoren, es ist jedoch auch möglich, geträgerte Katalysatoren einzusetzen. Bezüglich der Formen der Katalysatorteilchen gibt es grundsätzlich keine Einschränkungen, häufig werden Voll- oder Hohlzylinder, Kugeln, Sättel oder waben- bzw. sternförmige Stränge, eingesetzt. Geeignete Abmessungen der Katalysatorteilchen betragen beispielsweise für vollzylindrische Katalysatorteilchen etwa 1,5 x 4 bis etwa 4 x 8 mm.

Im Reaktorinnenraum sind strukturierte Packungen eingebracht, das heißt in regelmäßiger Geometrie systematisch aufgebaute Packungen mit definierten Durchtrittsbereichen für die Gegenstromphasen. Für die vorliegende Erfindung können grundsätzlich strukturierte Packungen, wie sie für die Destillationstechnik entwickelt werden, eingesetzt werden. Packungen sind in der Regel aus im Wesentlich parallel zueinander angeordneten geknickten Metallblechen, Streckmetall- oder Gewebelagen aufgebaut, mit zumeist geradlinigen Knicken, die das Packungsblech, die Streckmetall- oder Gewebelage in Knickflächen unterteilen, und wobei der Neigungswinkel der Knickfläche zur Horizontalen üblicherweise 60 bis 45° betragt. Für die vorliegende Erfindung sind Packungen bevorzugt, die aus Packungsblechen zum Einbau in Richtung der Längsachse des Festbettreaktors gebildet sind, mit geradlinigen Knicken, die das Packungsblech in Knickflächen unterteilen, wobei der Neigungswinkel der Knickflächen zur Horizontalen im Bereich von 90 bis 45°, bevorzugt bei 60°, liegt. Durch Anordnung von aufeinander folgenden Packungsblechen im gleichen Neigungswinkel zur Vertikalen, jedoch mit umgekehrten Vorzeichen, entstehen die bekannten Kreuzkanalstrukturen, wie sie beispielsweise die Packungen der Typen Mellapak, CY oder BX der Fa. Sulzer AG, CH-8404 Winterthur oder die Typen A3, BSH, B1 oder M der Fa. Montz GmbH, D-40723 Hilden aufweisen.

Es ist möglich, die Packungen zu einzelnen, etwa 0,15 bis 0,25 m hohen Schichten, zusammenzufassen.

Für die Anwendung im Festbettreaktor werden bevorzugt spezielle Ausführungsformen von strukturierten Packungen eingesetzt, die eine erhöhte Gasströmung zulassen.

Die Erfindung ist weiterhin dadurch gekennzeichnet, dass ein oder mehrere Packungsbleche mit hoher spezifischer Oberfläche mit einem oder mehreren Packungsblechen mit niedriger spezifischer Oberfläche alternierend angeordnet werden. Dadurch werden Zwischenräume mit jeweils unterschiedlichem hydraulischen Durchmesser gebildet. Die spezifischen Oberflächen der Packungsbleche werden dergestalt gewählt, dass zum einen Zwischenräume ausgebildet werden für die der Quotient aus dem hydraulischen Durchmesser und dem äquivalenten Durchmesser der Katalysatorteilchen < als 1 ist und zum anderen Zwischenräume für die der Quotient aus dem hydraulischen Durchmesser und dem äquivalenten Durchmesser der Katalysatorteilchen > als 2 ist, insbesondere im oben definierten Bereich zwischen 2 und 20, insbesondere zwischen 5 und 10, liegt. In die erstgenannten Zwischenräume, mit einem Verhältnis aus hydraulischem Durchmesser und äquivalentem Durchmesser der Katalysatorteilchen < als 1, werden keine Katalysatorteilchen eingefüllt, dieselben werden erfindungsgemäß lediglich in die Zwischenräume eingefüllt, in denen der genannte Quotient > als 2 ist. Durch diese besondere Ausrührungsform wird eine erhöhte Gasströmung mit niedrigen Druckverlusten gewährleistet.

Eine Vorrichtung mit einer strukturierten Pak-

kung in der sich erste und zweite Teilbereiche bilden, mit teilchenförmigem Katalysator in ersten Teilbereich, ist aus US 6,299,845 B bekannt.

Bevorzugt wird das Ausgangsmaterial für erfmdungsgemäße Packungen meist zusätzlich mit Öffnungen versehen, beispielsweise mit kreisförmigen Löchern mit etwa 4 bis 6 mm Durchmesser, um die Flutgrenze der Packung anzuheben und eine höhere Belastung des Reaktors zu ermöglichen. Unter Flutgrenze einer Packung wird das Gas- bzw. Flüssigkeitsvolumen pro Zeit und Querschnittsfläche verstanden, bei dem die Rieselflüssigkeit in und oberhalb der Packung bis zum vollständigen Überfluten aufgestaut bzw. vom Gasstrom mitgerissen wird. Eine Überschreitung dieser Belastung hat einen steilen Anstieg des Druckverlustes zur Folge.

Vorteilhaft sind Packungen, die Flächenanteile aufweisen, die gegen die Vertikale geneigt sind. Die horizontalen Flächenanteile fangen einen Teil des Gewichts der Katalysatorteilchen auf und leiten ihn an die Reaktorwand ab. Dadurch wird die mechanische Belastung des Katalysators reduziert.

Die spezifische Oberfläche von Packungen für die Destillation beträgt etwa 250 bis 750 $m^2/m^3$. Für erfindungsgemäße Festbettreaktoren werden je nach Rieselverhalten der Katalysatorpartikel, dessen Form und Abmessungen Packungen mit spezifischen Oberflächen, im Bereich von etwa 50 bis 400 $m^2/m^3$ bevorzugt eingesetzt.

Bei Destillationspackungen genügen Wandstärken der Metallbleche von typischerweise 0,07 bis 0,1 mm. Demgegenüber werden im Falle von heterogen katalysierten Reaktionen je nach Katalysatorgewicht und mechanischer Stabilität der Katalysatorkörner Wandstärken der Metallbleche im Bereich von 0,1 bis 5 mm, bevorzugt von 0,15 bis 1,0 mm verwendet.

Bevorzugt werden Packungen eingesetzt, die an ihrer Oberfläche einen verringerten Strömungswiderstand aufweisen, wobei dieser verringerte Strömungswiderstand insbesondere durch Perforationen und/oder Aufrauungen des Materials der Packung oder durch Ausbildung der Packung als Streckmetall erreicht wird. Dabei sind die Perforationen bevorzugt hinsichtlich ihrer Anzahl und Abmessungen dergestalt bemessen, dass mindestens ein Anteil von 20 %, bevorzugt ein Anteil von 40 bis 80 % der Flüssigkeit diese Perforationen passiert und auf die darunter liegenden Katalysatorteilchen fließt.

In einer bevorzugten Ausführungsvariante besteht das Packungsmaterial aus Streckmetall, wobei das Packungsmaterial so ausgebildet ist, dass die als Film am Packungsmaterial ablaufende Flüssigkeit möglichst vollständig durch das Packungsmaterial nach unten ablaufen kann, wobei das Abtropfen durch Ablaufkanten unterstützt wird.

Bevorzugt sind die Perforationen in der Nähe der unteren Knickkanten der Packungsbleche vorgesehen, wie in DE-A 100 31 119 beschrieben. Dadurch wird das Fluid bevorzugt auf die Oberseite der geneigten Knickflächen geleitet und die Flüssigkeitsbelastung auf der kritischen Unterseite verringert. Hierzu werden Packungen aus Packungsblechen eingesetzt, mit geradlinigen Knicken, die die Packungsbleche in Knickflächen unterteilen und die eine von Knickkante zu Knickkante zu messende Breite a sowie Perforationen aufweisen und wobei ein Anteil X von mindestens 60 % der Perforationen einen Abstand b von höchstens 0,4 a zur unteren Knickkante jeder Knickfläche aufweist. Bevorzugt beträgt der Anteil der von den Perforationen eine Knickfläche eingenommenen Fläche 5 bis 40 %, insbesondere 10 bis 20 % dieser Knickfläche.

Eine weitere bevorzugte Ausführungsform ist dadurch gekennzeichnet, dass die Packung aus alternierend angeordneten gewellten oder geknickten und ebenen Lagen ausgebildet ist, wobei sich die ebenen Lagen nicht bis an den Rand der Packung erstrecken oder in der Randzone der Packung eine erhöhte Gasdurchlässigkeit, insbesondere Löcher, aufweisen, entsprechend der DE-A 196 01 558.

Es ist auch möglich, anstelle von ebenen Zwischenlagen weniger stark gewellte oder geknickte Lagen vorzusehen.

Als Randzone der Packung wird ein konzentrisches Volumenelement bezeichnet, das sich zwischen einer äußeren Zylinderfläche und einer inneren Zylinderfläche (die Packungen haben typischerweise zylindrische Form) erstreckt, wobei die äußere Zylinderfläche durch die äußeren Enden der gewellten oder geknickten Lagen definiert ist und wobei die innere Zylinderfläche durch die äußeren Enden der ebenen Lagen definiert ist. Dabei schneidet die parallel zu den Packungslagen orientierte und durch die Reaktorachse verlaufende horizontale Verbindungslinie der inneren mit der äußeren Zylinderfläche einen bis zwanzig, vorzugsweise drei bis zehn durch jeweils nebeneinander angeordnete Lagen gebildete Kanäle. Bei nicht in die Randzone reichenden ebenen Lagen werden somit bis zu zwanzig Kanäle in der Randzone nebeneinander freigegeben. In die Randzone reichende zweite Lagen sind vorzugsweise auf 20 bis 90 %, besonders bevorzugt auf 40 bis 60 % ihrer Fläche, gasdurchlässig, also zum Beispiel mit Löchern versehen.

Gegenstand der Erfindung ist auch ein Verfahren zur Durchführung von heterogen katalysierten Reaktionen eines fluiden Reaktionsgemisches in einem Festbettreaktor, der wie vorliegend beschrieben mit einer Packung in Kombination mit einer Schüttung aus Katalysatorteilchen bestückt ist. Bevorzugt wird der Festbettreaktor hinsichtlich der Gasund Flüssigkeitsbelastung so betrieben, dass die Querschnittsbelastung 30 bis 300 $m^3/m^2 \cdot h$, bevorzugt 80 bis 120 $m^3/m^2 \cdot h$ beträgt.

Im erfindungsgemäßen Verfahren ist das fluide Reaktionsgemisch bevorzugt ein Gasgemisch.

In einem weiteren bevorzugten Verfahren ist das fluide Reaktionsgemisch ein Gas-/ Flüssigkeitsgemisch und das Gas und die Flüssigkeit werden im Gleichstrom durch den Festbettreaktor geleitet.

Gegenstand der Erfindung ist auch die Verwendung des vorstehend beschriebenen Festbettreaktors und der Verfahren zur Durchführung von heterogenen katalysierten Reaktionen, insbesondere zur Durchführung von stark exothermen oder stark indothermen Reaktionen, bevorzugt zur Durchführung von Hydrierungen oder Oxidationen.

Der erfindungsgemäße Festbettreaktor mit einer Kombination aus einer Katalysatorschüttung und einer Packung ist somit vorteilhaft bezüglich des möglichen Durchsatzes, da die Katalysatorschüttung an den Oberflächen der Packung größere Porosität aufweist als im Inneren der Katalysatorschüttung.

Vorteilhaft ist auch die verbesserte Quervermischung der Gas- und Flüssigkeitsströme über den Reaktorquerschnitt, und der Begrenzung von Maldistributionen mit der Folge der Vermeidung von Hotspots. Die bevorzugt angesetzte Kreuzkanalstruktur ermöglicht einen besonders vorteilhaften Queraustausch von Gasund Flüssigkeitsströmen in der Katalysatorschicht und vergleichmäßigt so das Temperaturprofil. Dieser Queraustausch kann noch verbessert werden, wenn zwischen die geknickten Packungslagen ebene Packungslagen eingelegt werden, die nicht bis zum Rand der Packung reichen dürfen.

Die Gefahr der Ausbildung unerwünschter Hotspots wird zusätzlich durch die verbesserte Wärmeleitung des Packungsmaterials verringert, da die Wärmeleitung in Metallen wesentlich größer ist als in den porösen Katalysatorschüttungen.

Besonders vorteilhaft wirken sich diese Einbauten hinsichtlich der mechanischen Belastung der Katalysatoren aus. Es ist bekannt, dass in vielen Einsatzfällen von Festbettreaktoren die mechanische Festigkeit der Katalysatorteilchen sowohl hinsichtlich der Reaktorauslegung begrenzt ist, als auch die erreichbare Laufzeit. Durch das Einbringen von Packungen können die Katalysatorteilchen mechanisch stark entlastet werden, in dem die Packungen das Gewicht der Katalysatorschüttung zum größten Teil aufnehmen und über Auflageroste an die Reaktorwand ableiten. Darüber hinaus ist der Katalysator in den Kanälen der Packung eingebettet und wird so bei einem Druckstoß mechanisch entlastet.

Die Erfindung wird im Folgenden anhand einer Zeichnung und von Ausführungsbeispielen näher erläutert.

Es zeigen im Einzelnen

Figur 1    eine schematische Darstellung einer Ausführungsform einer erfindungs-gemäßen Packung,

Figur 2    die schematische Darstellung eines Packungsbleches mit geradlinigen Knicken und

Figur 3    die schematische Darstellung eines Packungsbleches mit Perforationen.

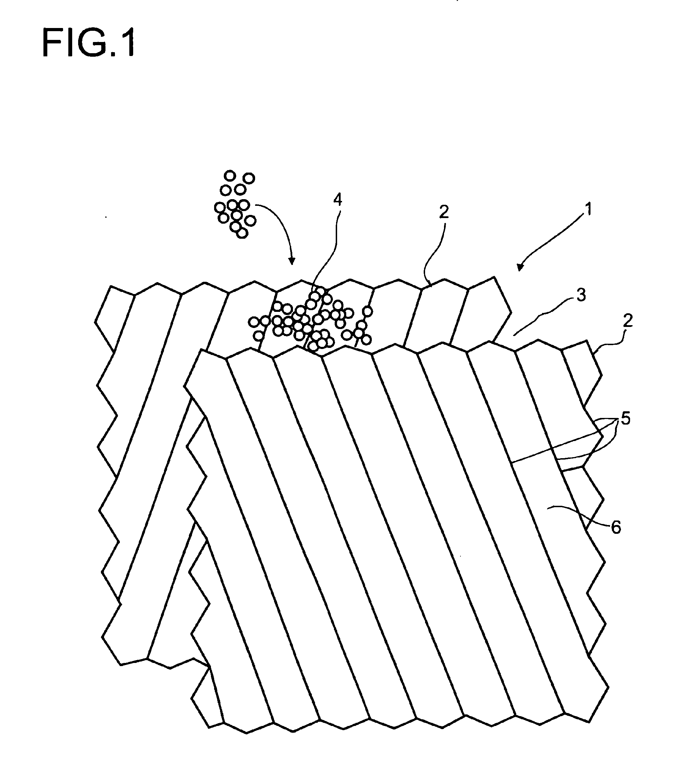

Die schematische Darstellung in Fig. 1 zeigt eine Packung 1 mit Packungsblechen 2, die geradlinige Knicke 5 unter Ausbildung von Knickflächen 6 aufweisen, wobei zwischen zwei aufeinanderfolgenden Packungsblechen 2 jeweils ein Zwischenraum 3 ausgebildet wird. In denselben werden erfindungsgemäß Katalysatorteilchen 4 eingefüllt.

Fig. 2 zeigt schematisch ein Packungsblech 2 mit geradlinigen Knicken 5, und Knickflächen 6. a stellt die Breite einer Knickfläche 6, gemessen von Knickkante 5 zu Knickkante 5, dar, c den Abstand zwischen zwei benachbarten Knickkanten 5 und h die Höhe eines Knickers.

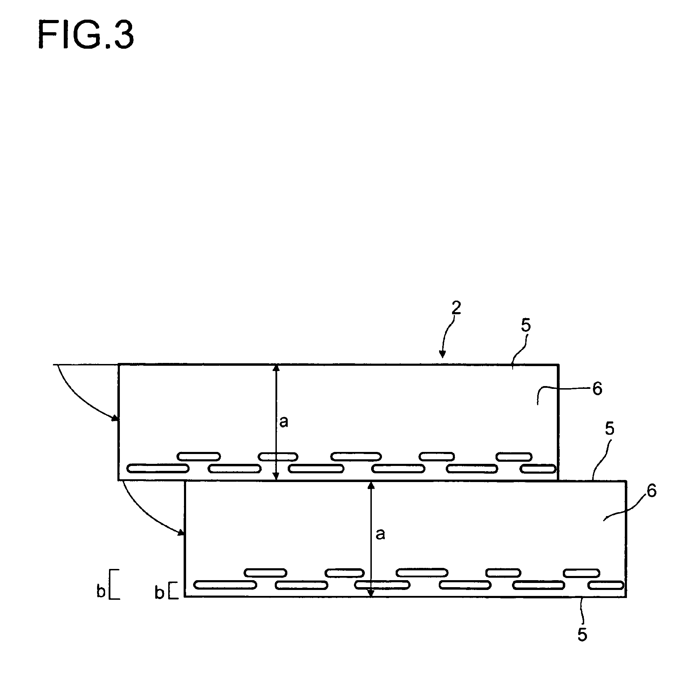

Fig. 3 zeigt schematisch eine besondere Ausführungsform eines Packungsbleches 2 mit Knickkanten 5, Knickflächen 6 und eine Breite a der Knickflächen 6 mit Perforationen, die einen Abstand b zur unteren Knickkante 5 jeder Knickfläche 6 aufweisen.

Im Folgenden wird unter Bezugnahme auf Fig. 2 die Berechnung des hydraulischen Durchmessers für eine Packung mit geradlinigen Knicken verdeutlicht:

Das in Fig. 2 beispielhaft dargestellte Packungsblech 2 weist parallel zueinander angeordnete, geradlinige Knicke 5 auf, die das Packungsblech 2 in Knickflächen 6 unterteilen. Die Breite einer Knickfläche 6, von Knickkante 5 zu Knickkante 5 gemessen, wird mit a bezeichnet, der Abstand zwei aufeinanderfolgender Knickkanten 5 mit c und die Höhe der Knicke mit h. Der hydraulische Durchmesser der Gasströmung für eine aus derartigen Packungsblechen aufgebaute Packung berechnet sich dann nach der Formel

$$d_{hydraulisch,Gas} = \frac{2\,c \cdot h}{c + 2a}$$

**Beispiele (nicht erfindungsgemäß)**

**Beispiel 1 Schüttversuche**

Ein Reaktor mit 0,3 m Durchmesser wurde mit zwei um 90° versetzt angeordneten Destillationspackungen des Typs B1 der Firma Montz bestückt, wobei die Höhe jeder Packung 23 cm betrug. In die Destillationspackungen wurden Katalysatorteilchen durch Schütten eingebracht. Dabei wurde das Füllvolumen und die Handhabbarkeit des Ein- und Ausbringens der Katalysatorteilchen bestimmt. Als Katalysatorteilchen wurden $\gamma$-$Al_2O_3$ und $TiO_2$-Vollzylinder eingesetzt. Die $\gamma$-$Al_2O_3$-Vollzylinder mit einem Durchmesser von 1,5 mm und einer Höhe von 1 bis 4 mm haben einen äquivalenten Partikeldurchmesser von 2 mm. Die $TiO_2$-Vollzylinder mit einem Durchmesser von 4 mm und einer Höhe von 2 bis 10 mm haben einen äquivalenten Partikeldurchmesser von 5mm.

1A) Schüttversuche mit $\gamma$-$Al_2O_3$-Vollzylindern, Durchmesser 1,5 mm. Es wurden Packungen des Typs B1 der Firma Montz mit jeweils unterschiedlichen spezifischen Oberflächen und unterschiedlichen Neigungswinkeln der Knickflächen zur Horizontalen eingesetzt.

$1A_1$) Es wurde eine Blechpackung des Typs B1-125.80 mit einer spezifischen Oberfläche von 125 $m^2/m^3$ und einem Winkel von 80° gegen die Horizontale eingesetzt. Dabei konnte 90 % des Leerrohrvolumens mit den oben genannten Katalysatorteilchen gefüllt werden. Die Packung hatte einen hydraulischen Durchmesser von 19 mm. Der Katalysator ließ sich sehr gut einbringen und rieselte im trockenen Zustand auch vollständig wieder heraus. Das Verhältnis des äquivalenten Durchmessers der Katalysatorteilchen zum hydraulischen Durchmesser der Packung betrug 9.

$1A_2$) Es wurde eine Packung des Typs B1-250.80 mit einer spezifischen Oberfläche von 250 $m^2/m^3$ und einem Winkel von 80° gegen die Horizontale mit den oben genannten Katalysatorteilchen befüllt. Hierbei konnten 80 % des Leerrohrvolumens mit Katalysatorteilchen gefüllt werden. Die Packung hat einen hydraulischen Durchmesser von 9,4 mm. Der Katalysator ließ sich sehr gut einbringen und rieselte im trockenen Zustand auch vollständig wieder heraus. Das Verhältnis des äquivalenten Durchmessers der Katalysatorteilchen zum hydraulischen Durchmesser der Packung betrug 4,7.

$1A_3$) Eingesetzt wurde eine Packung des Typs B1-250.60, das heißt mit einer spezifischen Oberfläche von 250 $m^2/m^3$ und einem Winkel von 60° gegen die Horizontale. 80 % des Leerrohrvolumens derselben konnten mit den oben genannten Katalysatorteilchen gefüllt werden. Die Packung hat einen hydraulischen Durchmesser von 9,4 mm. Der Katalysator ließ sich sehr gut einbringen und rieselte im trockenen Zustand auch vollständig wieder heraus. Das Verhältnis des äquivalenten Durchmesser der Katalysatorteilchen zum hydraulischen Durchmesser der Packung betrug 4,7.

1B) $TiO_2$-Vollzylinder, Durchmesser 4 mm Eingesetzt wurden die oben beschriebenen Blechpackungen des Typs B1-125.80 und B1-250.60.

$1B_1$) Eine Blechpackung des Typs B1-125.80, das heißt mit einer spezifischen Oberfläche von 125 $m^2/m^3$ und einem Winkel von 80° gegen die Horizontale wurde zu 80 % des Leerrohrvolumens mit den oben genannten Katalysatorteilchen gefüllt. Die Packung hat einen hydraulischen Durchmesser von 19 mm. Der Katalysator ließ sich sehr gut einbringen und rieselte im trockenen Zustand auch vollständig wieder heraus. Das Verhältnis des äquivalenten Teilchendurchmessers der Katalysatorteilchen zum hydraulischen Durchmesser der Packung betrug 4,5.

1B$_2$) Eine Packung des Typs B1-250.60, das heißt mit einer spezifischen Oberfläche von 250 m$^2$/m$^3$ und einem Winkel gegen die Horizontale von 60° wurde zu 50 % ihres Leerrohrvolumens mit den oben genannten Katalysatorteilchen gefüllt. Die Packung hatte einen hydraulischen Durchmesser von 9,4 mm. Der Katalysator ließ sich sehr gut einbringen und rieselte im trockenen Zustand auch vollständig wieder heraus. Das Verhältnis des äquivalenten Durchmessers der Katalysatorteilchen zum hydraulischen Durchmesser der Packung betrug 2,4.

Demgegenüber können bei handelsüblichen Katalysatorpackungen, bei denen der Katalysator in Taschen eingebracht ist, beispielsweise vom Typ Katapack der Firma Sulzer oder Multipack der Firma Montz nur 20 bis 30 % in Ausnahmefällen maximal 50 % des Leerrohrvolumens mit Katalysator gefüllt werden.

**Beispiel 2 Druckverlustmessungen**

In einem Kolonnenschuss mit 0,1 m Durchmesser wurden Druckverlustmessungen mit dem Testgemisch Stickstoff/Isopropanol gemacht. Dazu wurde die Katalysatorschüttung in den Kolonnenschuss eingebracht und mit einer definierten Menge an Isopropanol berieselt (eine Tropfstelle). Im Gegenstrom hierzu wurde eine definierte Menge an Stickstoff von unten nach oben durch die Packung/Schüttung geleitet. Bei den Versuchen wurde der spezifische Druckverlust pro Packungs- bzw. Schüttungshöhe gemessen und der Flutpunkt bestimmt. Als Katalysatorteilchen wurden $\gamma$-Al$_2$O$_3$-Vollzylinder eingesetzt. Die Vollzylinder ( d = 1,5 mm, h = 1 - 4 mm) hatten einen äquivalenten Partikeldurchmesser von 2 mm. Anschließend wurde der spezifische Druckverlust und der Flutpunkt von einer in eine strukturierte Packung eingebrachten Schüttung bestimmt.

**Beispiel 2, Vergleich**

Bei einer Schütthöhe von 45 cm wurde bei einem F-Faktor von 0,038 Pa$^{0,5}$ (entsprechend einem Gasstrom von 1000 l/h) und einer Berieselungsdichte von 0,178 m3/m$^2$h (entsprechend einem Flüssigkeitsstrom von 1,4 l/h) ein spezifischer Druckverlust von 3,33 mbar/m gemessen. Die Packung begann bei konstanter Flüssigkeitsbelastung von 0,178 m$^3$/m$^2$h ab einem F-Faktor von 0,0575 Pa$^{0,5}$ (entsprechend einem Gasstrom von 1500 l/h) zu fluten.

**Beispiel 2,**

Schüttung eingebracht in zwei um 90° gedrehte Lagen einer strukturierten Packung des Typs BS-250.60 der Firma Montz.

Bei einer Schütthöhe von 46 cm wurde bei einem F-Faktor von 0,038 Pa$^{0,5}$ (entsprechend einem Gasstrom von 1000 l/h) und einer Berieselungsdichte von 0,178 m$^3$/m$^2$h (entsprechend einem Flüssigkeitsstrom von 1,4 l/h) ein spezifischer Druckverlust von 1,09 mbar/m gemessen. Die Packung begann bei konstanter Flüssigkeitsbealstung von 0,178 m$^3$/m$^2$h ab einem F-Faktor von 0,114 Pa$^{0,5}$ (entsprechend einem Gasstrom von 3000 l/h) zu fluten. Die maximale Gasbelastung konnte somit im Vergleich zur Schüttung, die nicht in eine Packung eingebracht war, um den Faktor 2 gesteigert werden.

**Patentansprüche**

1.  Festbettreaktor zur Durchführung von Reaktionen fluider Reaktionsgemische in Gegenwart eines heterogenen teilchenförmigen Katalysators, mit einer strukturierten Packung (1), die im Reaktorinnenraum Zwischenräume (3) ausbildet, **dadurch gekennzeichnet, dass** der Reaktor erste und zweite Teilbereiche aufweist, die alternierend angeordnet sind und sich durch die spezifische Oberfläche der Packung (1) unterscheiden, dergestalt, dass in den ersten Teilbereichen der Quotient aus dem hydraulischen Durchmesser für den Gasstrom durch die Packung (1) und dem äquivalenten Durchmesser der Katalysatorteilchen (4) im Bereich von 2 bis 20, bevorzugt im Bereich von 5 bis 10 liegt, wobei die Katalysatorteilchen (4) lose unter Einwirkung der Schwerkraft in die Zwischenräume (3) eingebracht sind und verteilt und ausgetragen werden können und dass in den zweiten Teilbereichen der Quotient aus dem hydraulischen Durchmesser für den Gasstrom durch die Packung (1) und dem äquivalenten Durchmesser der Katalysatorteilchen (4) kleiner als 1 ist und dass in die zweiten Teilbereiche keine Katalysatorteilchen (4) eingebracht werden.

2.  Festbettreaktor nach Anspruch 1, **dadurch gekennzeichnet, dass** die strukturierte Packung (1) eine Kreuzkanalstruktur aufweist.

3.  Festbettreaktor nach Anspruch 1 oder 2, wobei die Packung (1) aus Packungsblechen (2) zum Einbau in Richtung der Längsachse des Festbettreaktors gebildet ist, mit geradlinigen Knicken (5), die die Packungsbleche(2) in Knickflächen (6) unterteilen, **dadurch gekennzeichnet, dass** der Neigungswinkel der Knickflächen (6) zur Horizontalen im Bereich von 80 bis 45°, bevorzugt bei 60°, liegt.

4.  Festbettreaktor nach einem der Ansprüche 1 bis 3, **dadurch gekennzeichnet, dass** die Packung(1) an ihrer Oberfläche einen verringerten Strömungswiderstand aufweist, bevorzugt durch Perforationen und/oder Aufrauung des Materials der Packung (1) oder durch Ausbildung der Packung(1) als Streckmetall.

**5.** Festbettreaktor nach einem der Ansprüche 1 bis 4, **dadurch gekennzeichnet, dass** die Packung (1) aus alternierend angeordneten gewellten oder geknickten und ebenen Lagen ausgebildet ist, wobei sich die ebenen Lagen nicht bis an den Rand der Packung (1) erstrecken.

**6.** Festbettreaktor nach einem der Ansprüche 1 bis 5, wobei die Packung (1) aus Packungsblechen (2) gebildet ist, mit geradlinigen Knicken (5), die die Packungsbleche (2) in Knickflächen (6) unterteilen und die eine von Knickkante (5) zu Knickkante (5) zu messende Breite a sowie Perforationen aufweisen, **dadurch gekennzeichnet, dass** ein Anteil X von mindestens 60 % der Perforationen einen Abstand b von höchstens 0,4 a zur unteren Knickkante (5) jeder Knickfläche (6) aufweist.

**7.** Verfahren zur Durchführung von heterogen katalysierten Reaktionen eines fluiden Reaktionsgemisches in einem Festbettreaktor nach einem der Ansprüche 1 bis 6, **dadurch gekennzeichnet, dass** der Festbettreaktor hinsichtlich der Gas- und Flüssigkeitsbelastung so betrieben wird, dass die Querschnittsbelastung 30 bis 300 m$^3$/m$^2$· h, bevorzugt 80 bis 120 m$^3$/m$^2$·h beträgt.

**8.** Verfahren nach Anspruch 7, **dadurch gekennzeichnet, dass** das fluide Reaktionsgemisch ein Gas-/Flüssigkeitsgemisch ist und dass das Gas und die Flüssigkeit im Gleichstrom durch den Festbettreaktor geleitet werden.

**9.** Verwendung eines Festbettreaktors nach einem der Ansprüche 1 bis 6 oder eines Verfahrens nach einem der Ansprüche 7 oder 8 zur Durchführung von stark exothermen oder stark endothermen Reaktionen, bevorzugt zur Durchführung von Hydrierungen oder Oxidationen.

**Claims**

**1.** A fixed-bed reactor for carrying out reactions of fluid reaction mixtures in the presence of a heterogeneous particulate catalyst having a structured packing (1) which forms interstices (3) in the reactor interior, wherein the reactor has first and second part regions which are arranged in alternation and which differ by the specific surface area of the structured packing (1) in such a manner that in the first part regions the quotient of the hydraulic diameter for the gas stream through the structured packing (1) and the equivalent diameter of the catalyst particles (4) is in the range from 2 to 20, preferably in the range from 5 to 10, the catalyst particles (4) being introduced into the interstices (3) and being able to be distributed and discharged loose under the action of gravity and in the second part regions the quotient of the hydraulic diameter for the gas stream through the structured packing (1) and the equivalent diameter of the catalyst particles (4) is less than 1 and no catalyst particles (4) are introduced into the second part regions.

**2.** The fixed-bed reactor according to claim 1, wherein the structured packing (1) has a cross-channel structure.

**3.** The fixed-bed reactor according to claim 1 or 2, in which the structured packing (1) is formed from structured metal packing sheets (2) for installation in the direction of the longitudinal axis of the fixed-bed reactor, having linear corrugations (5) which subdivide the structured metal packing sheets (2) into corrugated surfaces (6), wherein the angle of inclination of the corrugated surfaces (6) to the horizontal is in the range from 80 to 45°, preferably 60°.

**4.** The fixed-bed reactor according to one of claims 1 to 3, wherein the structured packing (1) has a reduced resistance to flow at its surface, preferably due to perforations and/or roughness of the material of the structured packing (1) or by constructing the structured packing (1) as expanded metal.

**5.** The fixed-bed reactor according to one of claims 1 to 4, wherein the structured packing (1) is formed from rippled or corrugated layers and flat layers arranged alternately, the flat layers not extending to the edge of the structured packing (1).

**6.** The fixed-bed reactor according to one of claims 1 to 5, in which the structured packing (1) is formed from structured metal packing sheets (2) having linear corrugations (5) which subdivide the structured metal packing sheets (2) into corrugated surfaces (6) and which have a width a, measured from corrugated edge (5) to corrugated edge (5), and perforations, wherein a proportion X of at least 60% of the perforations has a distance b of at most 0.4 a to the lower corrugated edge (5) of each corrugated surface (6).

**7.** A process for carrying out heterogeneously catalyzed reactions of a fluid reaction mixture in a fixed-bed reactor according to one of claims 1 to 6, which comprises operating the fixed-bed reactor with respect to gas and liquid loads in such a manner that the load per unit cross-sectional area is from 30 to 300 m$^3$/m$^2$·h, preferably from 80 to 120 m$^3$/m$^2$·h.

8. The process according to claim 7, wherein the fluid reaction mixture is a gas/liquid mixture and wherein the gas and the liquid are passed cocurrently through the fixed-bed reactor.

9. The use of a fixed-bed reactor according to one of claims 1 to 6, or of a process according to either of claims 7 and 8, for carrying out highly exothermic or highly endothermic reactions, preferably for carrying out hydrogenations or oxidations.

## Revendications

1. Réacteur à lit fixe pour la réalisation de réactions de mélanges réactionnels fluides en présence d'un catalyseur hétérogène sous forme de particules, présentant un garnissage structuré (1) qui forme des espaces intermédiaires (3) dans l'espace interne du réacteur, **caractérisé en ce que** le réacteur présente des premières et deuxièmes zones partielles, disposées en alternance et se distinguant par la surface spécifique du garnissage (1), de manière telle que dans les premières zones partielles, le quotient du diamètre hydraulique pour le flux gazeux à travers le garnissage (1) et du diamètre équivalent des particules de catalyseur (4) se situe dans la plage de 2 à 20, de préférence dans la plage de 5 à 10, les particules de catalyseur (4) étant introduites en vrac sous l'effet de la gravité dans les espaces intermédiaires (3) et pouvant être réparties et évacuées et **en ce que** dans les deuxièmes zones partielles, le quotient du diamètre hydraulique pour le flux gazeux à travers le garnissage (1) et du diamètre équivalent des particules de catalyseur (4) est inférieur à 1 et **en ce qu'**on n'introduit pas de particules de catalyseur (4) dans les deuxièmes zones partielles.

2. Réacteur à lit fixe selon la revendication 1, **caractérisé en ce que** le garnissage structuré (1) présente une structure à canaux croisés.

3. Réacteur à lit fixe selon la revendication 1 ou 2, le garnissage (1) étant formé de tôles de garnissage (2) pour le montage dans le sens de l'axe longitudinal du réacteur à lit fixe, avec des plis linéaires (5) qui divisent les tôles de garnissage (2) en surfaces plissées (6) **caractérisé en ce que** l'angle d'inclinaison des surfaces plissées (6) par rapport à l'horizontale se situe dans la plage de 80 à 45°, de préférence à 60°.

4. Réacteur à lit fixe selon l'une quelconque des revendications 1 à 3, **caractérisé en ce que** le garnissage (1) présente, en sa surface, une résistance à l'écoulement moindre, de préférence par des perforations et/ou une augmentation de la rugosité du matériau du garnissage (1) ou par réalisation du garnissage (1) sous forme de métal déployé.

5. Réacteur à lit fixe selon l'une quelconque des revendications 1 à 4, **caractérisé en ce que** le garnissage (1) est formé à partir de couches ondulées ou plissées et planes disposées de manière alternée, les couches planes ne s'étendant pas jusqu'au bord du garnissage (1).

6. Réacteur à lit fixe selon l'une quelconque des revendications 1 à 5, le garnissage (1) étant formé de tôles de garnissage (2), présentant des plis linéaires (5) qui divisent les tôles de garnissage (2) en surfaces plissées (6) et qui présentent une largeur a mesurée de bord de pli (5) à bord de pli (5) ainsi que des perforations, **caractérisé en ce qu'**une proportion X d'au moins 60% des perforations présente une distance b d'au plus $0,4 \cdot a$ par rapport au bord de pli (5) inférieur de chaque surface plissée (6).

7. Procédé pour la réalisation de réactions catalysées de manière hétérogène d'un mélange réactionnel fluide dans un réacteur à lit fixe selon l'une quelconque des revendications 1 à 6, **caractérisé en ce que** le réacteur à lit fixe est exploité, par rapport à la charge en gaz et en liquide, de manière telle que la charge transversale est de 30 à 300 m$^3$/m$^2$ * h, de préférence de 80 à 120 m$^3$/m$^2$ * h.

8. Procédé selon la revendication 7, **caractérisé en ce que** le mélange réactionnel fluide est un mélange gaz/liquide et **en ce que** le gaz et le liquide sont guidés en flux parallèles à travers le réacteur à lit fixe.

9. Utilisation d'un réacteur à lit fixe selon l'une quelconque des revendications 1 à 6 ou d'un procédé selon l'une quelconque des revendications 7 ou 8 pour réaliser des réactions fortement exothermiques ou fortement endothermiques, de préférence pour la réalisation d'hydrogénations ou d'oxydations.

# FIG.1

# FIG.2

# FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6299845 B
- DE 10031119 A
- DE 19601558 A